# EUROPEAN PATENT SPECIFICATION

(11) **EP 0 947 820 B1**
(45) Date of publication and mention of the grant of the patent: **25.08.2004**
(21) Application number: 99103671.6
(22) Date of filing: 25.02.1999
(51) Int. Cl.: G01N 1/38, B01L 3/00, G01N 35/02, G01N 33/549

(54) **Method for sample preparation**
Verfahren zur Probenaufbereitung
Méthode de préparation d'un échantillon

(30) Priority: 31.03.1998 EP 98105851
(43) Date of publication of application: 06.10.1999
(73) Proprietor: Evotec OAI AG, 22525 Hamburg (DE)
(72) Inventor: Henco, Karsten Dr., D-40699 Erkrath (DE)
(74) Representative: Meyers, Hans-Wilhelm, Dr.Dipl.-Chem.

(56) References cited:
- EP-A- 0 609 766
- EP-A- 0 689 844
- US-A- 5 770 458

## Description

The present invention relates to a method for sample preparation, to a multi-well container and to the use of additives in the production of multi-well containers.

Pharmaceutical companies nowadays apply high throughput drug discovery systems which enable automated, highly miniaturized screening of hundreds of thousands of samples to discover pharmacologically active compounds interacting with therapeutic targets on the molecular level. The compounds may be synthetic molecules - which are e.g. part of a compound library built by combinatorial chemistry or which are the collection of compounds synthesized manually during the companies history - or they may be isolated from natural sources such as bacteria or plants. There is a strong need for a reliable early-on evaluation of the pharmacological potential of these compounds in order to determine the most promising candidates for the costly drug discovery. As a lot of compounds are availabe in only small amounts, it is of particular importance that these compounds can be stored in a safe manner without deterioration and further without a limited availability of the compounds during a screening assay e.g. due to their stickiness to the walls of a sample carrier.

It is state of the art to store the compounds to be screened in the form of concentrated stock solutions in solvents such as DMSO. Fractions of these stock solutions will then be transferred into sample containers in which a possible interaction between the compound and a target substance, e.g. a receptor of interest, will be tested in a so-called "screening assay". It cannot be excluded that DMSO might have unwanted or adverse effects on the assay. In addition, applicants' experimental results prove that some compounds are deteriorated or become instable during their storage in DMSO.

Pharmaceutical formulations and food stuffs often contain additives such as cyclodextrins, different oligo- or polysaccharides or derivatives thereof for increasing their durability and bioavailability of their components.

Cyclodextrins are cyclic oligosaccharides. The most common cyclodextrins are α-cyclodextrin, which is composed of a ring of six glucose residues; β-cyclodextrin, which is composed of a ring of seven glucose residues; and γ-cyclodextrin, which is composed of a ring of eight glucose units. Cyclodextrins typically form a cavity which is essentially lipophilic, while the outside of the cyclodextrin is essentially hydrophilic; this combination of properties has led to widespread study of the natural cyclodextrins, particularly in connection with pharmaceuticals, and many inclusion complexes with drugs have been reported. Due to its cavity size, β-cyclodextrin has been of special interest, but its relatively low solubility in water (1.8 % w / v at 25 °C), attendant nephrotoxicity and hemolytic activity have limited its use in the pharmaceutical field.

Attempts to modify properties of the natural cyclodextrins have resulted in the development of a reasonably large number of cyclodextrin derivatives. In general, these chemically modified cyclodextrins are formed by reaction of the hydroxyl groups attached to the carbons 2, 3 or 6 without disturbing the α (1→4) hemiacetal linkages.

Inclusion complexes of α-, β- or γ-cyclodextrin or their mixtures with a variety of drugs have been described by numerous parties and various advantages have been attributed to the complexes. For instance, U.S. Patent 4,596,795 describes inclusion complexes of sex hormones, particular testosterone, progesterone and estradiol, with specific cyclodextrins, preferably hydroxypropyl-β-cyclodextrin and poly-β-cyclodextrin. Janssen Pharmaceutica N.V.'s International patent application No. PCT/EP 84/00417 (published under WO 85/02767) describes pharmaceutical compositions comprising inclusion compounds of drugs, which are unstable or only sparingly soluble in water, with partially etherified β-cyclodextrin derivatives having hydroxyalkyl and optionally additional alkyl groups. Among the cyclodextrin derivatives contemplated is hydroxypropyl-β-cyclodextrin, while the drugs include nonsteroidal anti-rheumatic agents, steroids, cardiac glycosides and derivatives of benzodiazepine, benzimidazole, piperidine, piperazine, imidazole and triazole. The pharmaceutical compositions described include oral, parenteral and topical formulations, with 4 to 10 % solutions of cyclodextrin derivatives being used to solubilize the various drugs.

U.S. Patent 4,727,064 claims a composition containing an amorphous complex of cyclodextrin and a drug, and a method of producing a stabilizing amorphous complex of a drug and a mixture of cyclodextrins comprising (1) dissolving an intrinsically amorphous mixture of cyclodextrin derivatives which are water soluble and capable of forming Inclusion complexes with drugs in water; and (2) solubilizing lipophilic drugs into aqueous media to form a solution and form a solubilized drug/cyclodextrin complex. The patent describes the preparation of various substituted amorphous cyclodextrins, including hydroxypropyl-β-cyclodextrin and hydroxypropyl-γ-cyclodextrin. It is stated that the cyclodextrin additives may be utilized in weight percent of usually about 40 - 60 % of the drug solution composition and may be utilized from about 5 - 95 % of the drug solution composition.

U.S. Patent 5,580,856 discloses that dried proteins are stabilized against loss of biological activity in formulations by adding a reconstitution stabilizer upon rehydration of the dried protein.

Immobilized cyclodextrins may be obtained using a variety of procedures. U.S. Patent 5,183,809 provides a method of stabilizing protein factors, in particular heparin binding growth factor, by combining it with a polyionic derivative of a cyclodextrin polymer or a polyionic derivative of at least one cyclodextrin immobilized on a solid surface. These can be immobilized on a solid surface by covalently linking the derivatives e.g. via a linker arm. Polyanionic cyclodextrins can e.g. be impregnated on an inorganic oxide which strongly binds anions. Polyionic derivatives may further be immobilized on a solid surface via electrostatic interactions between the ionic entities of the solid surface. The protein factor is bound to the cyclodextrin by contacting the protein factor suspended in a solution such as a low salt solution that promotes the binding of the protein factor to the cyclodextrin. The protein factor is released by contacting the protein factor/cyclodextrin polymer complex with a such or a solution such as a high salt solution that would promote the release of the protein factor.

A microtiterplate (MTP) for enzyme immunoassays is a known tray-like article having a plurality of wells which are usually aranged in a rectangular array, typically having 8 rows by 12 columns, and which are usually made by moulding from a transparent plastics material such as transparent polystyrene. In conventional use, e.g. ELISA, the tray including the wells is coated with an antigen or antibody either directly or indirectly and used to measure the degree of binding of the antibody with an enzyme conjugate by introducing the latter into the wells of the coated tray, incubating the two together in the tray, and sub-sequently measuring the optical density provided by the action of the enzyme on a substrate.

None of the foregoing references are believed to anticipate or render obvious applicants' invention as described and claimed herein.

The object of the present invention is to avoid the drawbacks of the prior art as adressed herein above. In contrast to the prior art - especially to the field of galenics where the object is to provide an additive which is suited to stabilize a well-defined drug - it is an object of the present invention to provide a solution for the storage of a high number of different compounds. These compounds often have different properties such as charge, hydrophobicity, molecular weight etc. The compounds may be synthetic molecules or they may be isolated from natural sources such as bacteria or plants. Especially for the purposes of high throughput screening, this high diversity of compounds with often unknown properties should be stored in a safe manner without the need of adjusting the additive to each compound.

The present invention relates to a method for sample preparation comprising the steps of claim 1.

The present invention combines the following improvements: a) decreased tendency of the dry-stored compounds to stick to the walls of the sample carrier or to form insoluble aggregates during the drying process so that they can be resolved efficiently; b) dry-stored compounds can be easily shipped to another place where the actual screening process can be performed; c) low deterioration rate of the stored compounds; d) simpler plate handling; e) no humidity control, especially in miriuaturized multi-well containers; f) the screening assay can be performed in aqueous solution.

Although the present invention may be used with compounds that are highly soluble in water, the fullest advantage of the solubilizing effect of additives will be realized in connection with compounds that have low solubility in aqueous solution.

The present invention has applications in high throughput screening (HTS) for pharmaceutically active compounds requiring efficient release/dissolution of intact ingredients in the presence of assay buffer. In addition, it is a valuable tool in diagnostics.

The method of the present invention requires removing the solvent of the compound. In one embodiment it further requires removing the solvent of an additive or a mixture of additives. Removing processes that can be used within the present invention have been described in the prior art and include, but are not limited to, drying processes such as lyophilization, spray-drying and air drying. A lyophilization cycle is usually composed of three steps: freezing, primary drying and secondary drying, as e.g. described in U.S. Patent 5,580,856. Spray-drying is typically achieved by microdispersing a solution into a stream of hot gas. Air-drying is typically performed by placing solutions at ambient temperatures in a very low humidity environment.

For the purpose of performing e.g. a screening assay, the method further comprises the step of identifying whether a compound interacts with said substance. The identification process is preferably based on the application of fluorescence techniques. It is preferred to use confocal fluorescence techniques such as fluorescence correlation spectroscopy (FCS), as in detail described in WO 94/16313 and WO 96/13744. It might further be preferred to rely on a fluorescence technique which is suited to determine molecular brightnesses and which is in detail disclosed in PCT/EP 97/05619 (herewith incorporated by reference).

The additive or a mixture of additives is present in the container before adding a solution of a compound. It might be particularly useful to use a container in which the additive or mixture of additives is present in immobilized form. Immobilization can e.g. be achieved by covalently coupling the additive to the container. This embodiment might be of advantage as the risk of disturbance of the assay conditions due to the presence of additive is minimized. In a further embodiment, immobilization can also be due to non-covalent interaction between the additive and the walls of the container.

In some situations it might be preferred that a solution of an additive or mixture of additives is combined with said solution of a compound. For storage purposes, it is necessary that the solvent of said additive(s) is removed. This removal can preferably be performed together with the removal of the solvent of the compound.

In another embodiment, the step of redissolving the compound is carried out by adding a solution of a substance to be tested for its potential interaction with said compound.

For screening purposes, it is preferred to use a multi-well container such as a known microtiter or nanotiter plate. It is preferred to have wells with a volume smaller than 10 µl, especially smaller than 2 µl. Redissolution in these small compartment can be achieved without shaking or stirring.

Though a lot of different additives can be used, the present invention uses a cyclodextrin or a derivative thereof. It is advantageous to use hydroxypropyl-β-cyclodextrin. This should preferably be present in a final amount being from about 0.05 % to 4 % by weight, based on the total volume of the final solution after the solution of the substance to be tested has been added. In a further embodiment, hydroxypropyl-β-cyclodextrin is present in a final amount being from about 0.05 % to 2 % by weight, based on the total volume of the final solution after the solution of the substance to be tested has been added. In another embodiment, hydroxypropyl-β-cyclodextrin is present in a final amount being from about 0.1 % to 1.5 % by weight, based on the total volume of the final solution after the solution of the substance to be tested has been added.

It might be preferred to use multi-well containers disclosed in WO 93/07258. This patent application discloses a cell culture substrate having a microstructured, plate-like body with a plurality of depressions mutually separated by webs for receiving cells or cell aggregates.

The present invention further relates to the use of additives for the production of multi-well containers.

The nature and advantages of the present invention may be better understood on the basis of the following figures and examples.
Figure 1 shows the hydroxypropyl-β-cyclodextrin concentration dependence of recoveries after dry-storage.
Figure 2 shows the recovery of extract compounds.
Figure 3 shows the recovery of shelf-compounds.
Figure 4 shows the recovery of compounds in water and DMSO after dry-storage.
Figure 5 shows the degradation time-course of compound L.
Figure 6 shows the recovery of compounds after dry-storage in wells substantially coated with an effective amount of an additive and uncoated wells.

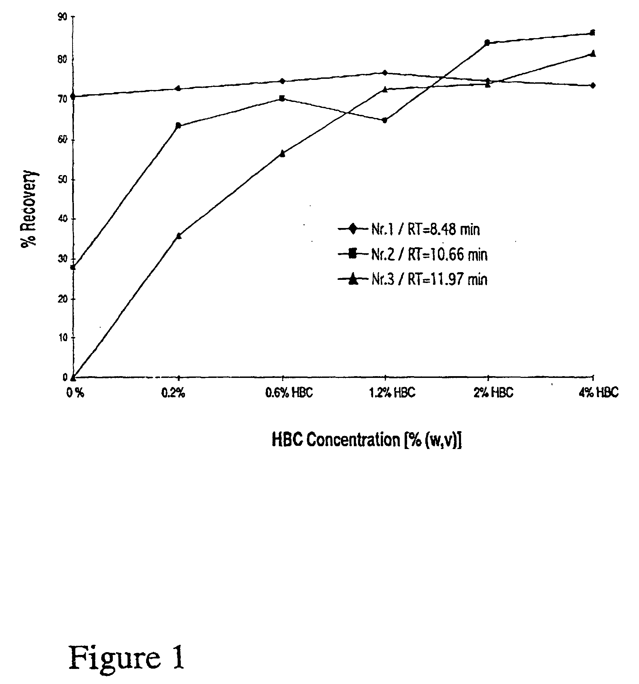

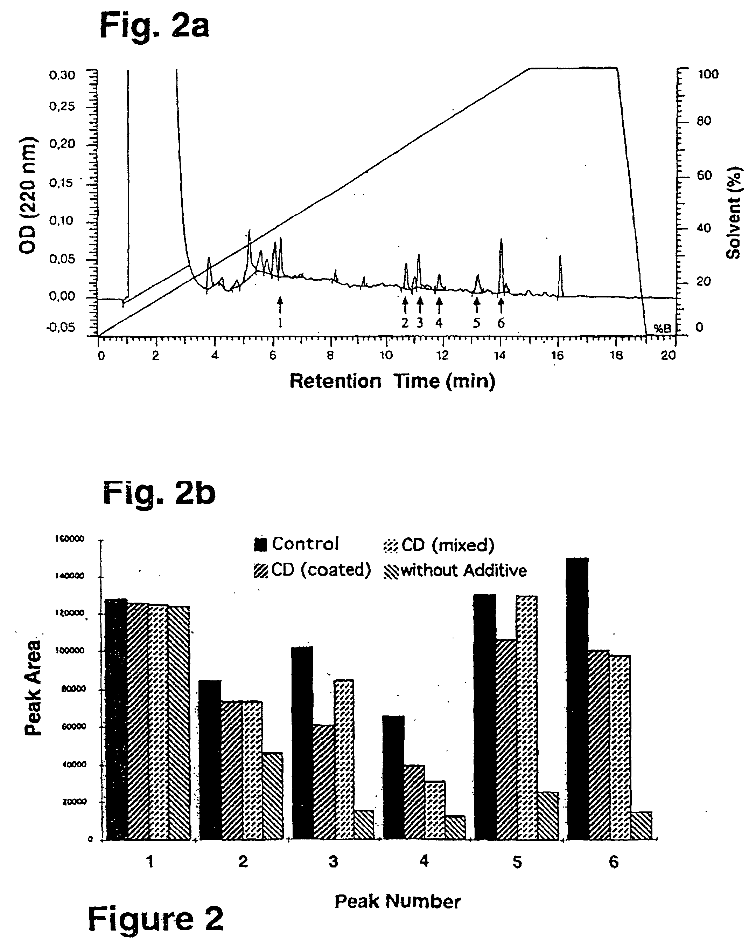

Figure 1 discloses the HBC concentration dependence of recoveries after dry-storage. 15 µl aliquots of a natural extract were desiccated and stored in microtiter plates in the presence of increasing amounts of HBC (2-hydroxypropyl-β-cyclodextrin) as described in the legend to Fig. 2. The recovery of three representative peaks was determined. Retention-time of Peaks No. 1 to No. 3 were 8.48 min, 10.66 min and 11.97 min, respectively. The peaks represent a more hydrophilic, a less hydrophilic and a hydrophobic compound, respectively. "0% HBC" corresponds to the control, where water was added to the extracts instead of HBC solution. %-recovery values were determined as follows: Peak areas of the DMSO control were considered "100% recovery" (% Recovery = peak area of dried sample/peak area of DMSO control). The HPLC conditions were as follows:
Injection Volume: 10 µl
Temperature: Room-Temperature
HPLC Säule: Merck LiCosphere RP-18, 5 µm
Run-Time: approx. 11 min
Data Recording: 200 nm - 250 nm (Diode Array Detector)
Gradient Details:

| Time | 0.1% TFA/Wasser | 0.1% TFA/Acetonitrile | Flow |
|---|---|---|---|
| 0 min | 90% | 10% | 1 ml/min |
| 5 min | 0% | 100% | 1 ml/min |
| 6 min | 90% | 10% | 1 ml/min |
| 8 min | 90% | 10% | 1 ml/min |

Figure 2 shows the recovery of extract components. The experimental procedure was as follows: 15 µl aliquots of extracts (50% DMSO, 10 mM NaCl) contained in wells of microtiterplates (MTPs) were dried in a desiccator overnight at room-temperature. Two different regimens were used for the addition of additive (HBC): In the first procedure, HBC was coated to MTP-wells in advance by drying 1.5 µl of a 15% (w / v) stock solution to the bottom of the well (CD coated). In the second procedure, the same volume of HBC solution was mixed with the extract solution before desiccation (CD mixed). After desiccation, pellets were resuspended in 15 µl of water and centrifuged for 5 min at 15000 rpm. 10 µl of the supernatant were HPLC-analyzed. 10 µl of extract (DMSO solutions) served as control. HPLC conditions were identical to those described in the legend to Figure 1 (10 µl injection volume).

Figure 2A shows the HPLC profile of the extract. Recovery of 6 peaks (arrows) were compared under the conditions described above except gradient details. A linear acetonitrile/water gradient (0-100% acetonitrile in 15 min) was used.

Figure 2B gives a graphic representation of recovery of the 6 peaks highlighted in Fig. 2A in the presence or absence of 1.5% HBC.

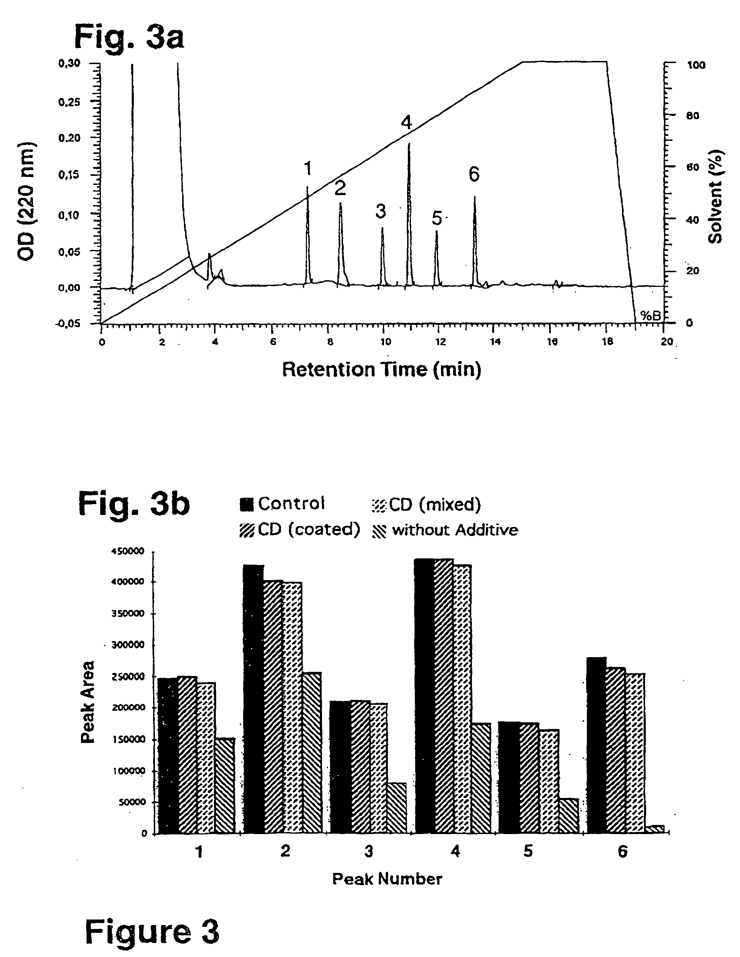

Figure 3 shows the recovery of shelf-compounds. Figure 3 a shows the HPLC profile of 10 µl cocktail of 6 shelf-compounds (800 µM each). Retention-times: 1: 7.3 min; 2: 8.5 min; 3: 10 min, 4: 11 min; 5: 12 min; 6: 13.3 min. Figure 3b discloses a graphic representation of recovery observed in the presence or absence of 1.5% HBC for each compound. The experimental procedure was as described for the extract components (Fig. 2).

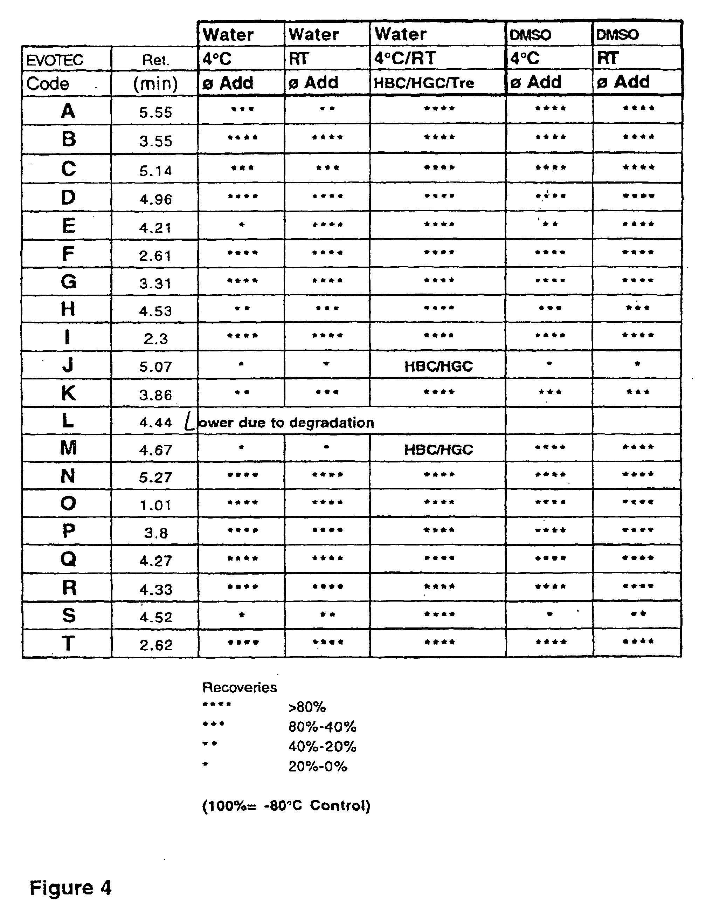

Figure 4 shows the recovery of compounds in water and DMSO after dry-storage. 20 µl aliquots of a panel of 20 reference compounds (1 mM each in 50 % DMSO, 10 mM NaCl) were stored in microtiter plates in the presence and absence of additives (HBC, HGC, Trehalose; 1.5% (w / v) each) for 10 weeks. The dried compounds were reconstituted by the additon of 20 µl water (or 100% DMSO). In order to actively support the dissolution process, the 20 µl were pipetted up-and-down several times. Insoluble particles were sedimented by centrifugation. Recoveries were determined by comparing the peak areas of the stored compound with those of the -80 °C controls (the retention times of each compound is also shown).

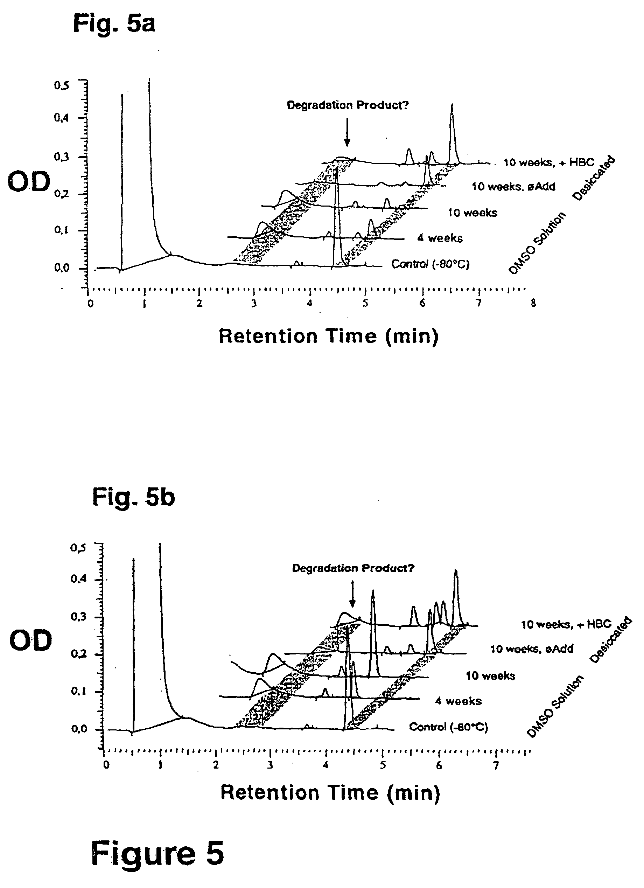

Figure 5 shows the degradation time-course of compound L. HPLC profiles of compound L stored under different conditions are shown: Control profiles (-80 °C storage), storage as DMSO solutions (4 weeks, 10 weeks) and desiccated storage for 10 weeks (without additive and in presence of 1.5% (w / v) HBC. Compound L, as deduced from the control stored at -80 °C, elutes as one main peak at 4.5 min. The top profiles show the results obtained for storage at 4 °C. Fig. 4B shows the results for room-temperature storage. The shaded areas highlight the position of the peak of the intact compound (-80 °C control used as reference). The shaded area at approximately 2 min. highlights the region of a broad peak, probably a degradation product of compound L.

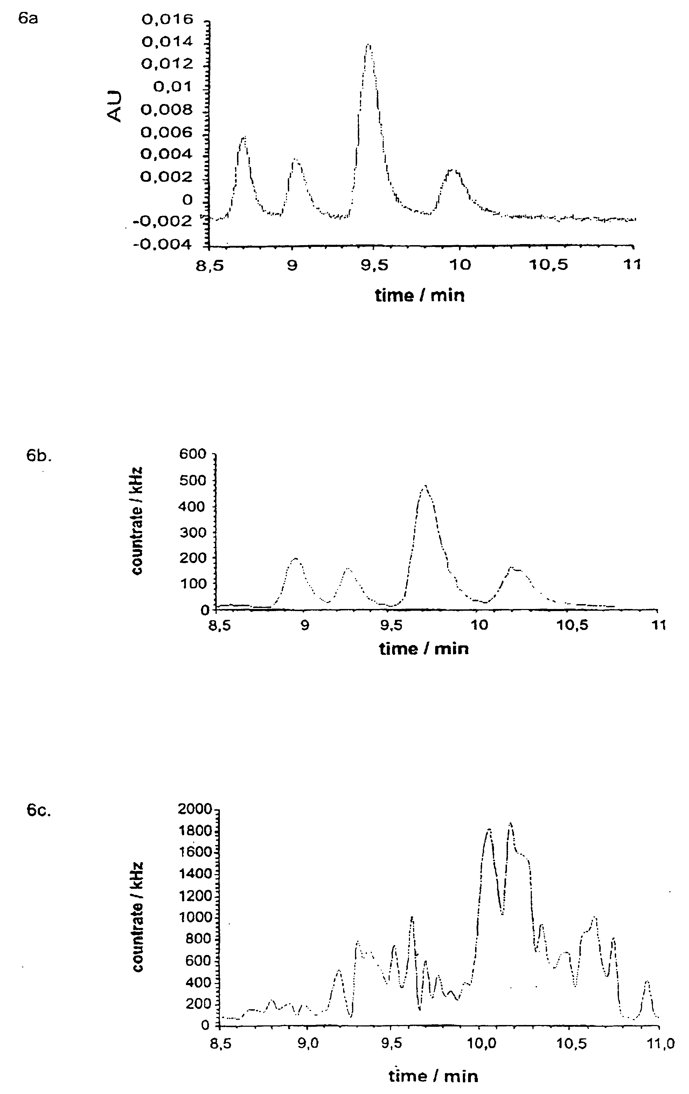

Figure 6 shows the recovery of compounds after dry-storage in wells substantially coated with an effective amount of an additive and uncoated wells. Figure 6 a shows the RP-HPLC profile of the separation of a mixture of tetramethylrhodamine glycine and its reaction products using a linear gradient of water (plus 0.1%TFA) and acetonitrile from 0% to 100% acetonitrile in 15 minutes, monitoring the absorption at 540 nm. Figure 6b and 6c disclose the recovery of this mixture after dry-storage and subsequent dissolution in microtiter plates (6b) precoated with 2-hydroxypropyl-β-cyclodextrine and (6c) uncoated plates. The measurements were done by fluorescence correlation spectroscopy at 543 nm.

### Example 1: Long term stability studies of 20 compounds

The aim of these experiments was to monitor the stability of a panel of 20 reference compounds stored under different conditions over a period of months. Some of the compounds were expected to be instable when stored as DMSO solutions. Dry-storage of compounds in the presence and absence of additives was therefore of particular interest.

### Treatment & Storage

Compounds were received as solids. Details of the compounds are listed in Table 1. For convenience, compounds were alphabetically labelled A-T. 10 mM stock solutions were prepared by dissolving them in appropriate amounts of 100 % DMSO and stored until further use, i.e. until the actual storage experiments, at -80 °C.

**Table 1**

| Compounds | | |
|---|---|---|
| Code | Retention time / min. | Molecular weight |
| A | 5.55 | 420.24 |
| B | 3.55 | 232.29 |
| C | 5.14 | 292.38 |
| D | 4.96 | 364.93 |
| E | 4.21 | 312.39 |
| F | 2.61 | 175.24 |
| G | 3.31 | 361.85 |
| H | 4.53 | 468.28 |
| I | 2.3 | 387.85 |
| J | 5.07 | 488.61 |
| K | 3.86 | 324.43 |
| L | 4.44 | 420.54 |
| M | 4.67 | 448.40 |
| N | 5.27 | 414.03 |
| O | 1.01 | 267.25 |
| P | 3.8 | 295.80 |
| Q | 4.27 | 422.40 |
| R | 4.33 | 307.80 |
| S | 4.52 | 370.45 |
| T | 2.62 | 255.80 |

Prior to storage experiments, HPLC profiles of the 10 mM stock solutions were recorded. 20 nmol of each compound was found to be sufficient to yield interpretable HPLC profiles. Thus, aliquots of at least 20 nmol were stored.

Storage conditions differed in:
1. Storage Temperature: 4 °C and room-temperature "RT" (Control: -80 °C storage)
2. Additives: presence and absence of additives (hydroxypropyl-β-cyclodextrin, abbr. "HBC"; hydroxypropyl-γ-cyclodextrin, abbr. "HGC"; Trehalose)
3. "Dry-storage" and storage as "DMSO-solution" (50 % DMSO, 10 mM NaCl)

A complete list of the storage conditions for each compound is shown in Table 2 below. Generally, the compounds were stored in the dark, however, one aliquot of compound/DMSO solution was stored at day-light (Condition 2).

**Table 2**

| Storage Conditions | | | |
|---|---|---|---|
| Condition | Temp. | Desiccated / Solution | Additive |
| 1 | -80 °C | "Control" | - |
| 2 | RT | Solution (daylight) | - |
| 3 | RT | Solution | - |
| 4 | RT | Solution | HBC |
| 5 | RT | Desiccated | - |
| 6 | RT | Desiccated | HBC |
| 7 | RT | Desiccated | HGC |
| 8 | RT | Desiccated | Trehalose |
| 9 | 4 °C | Solution | - |
| 10 | 4 °C | Solution | HBC |
| 11 | 4 °C | Desiccated | - |
| 12 | 4 °C | Desiccated | HBC |
| 13 | 4 °C | Desiccated | HGC |
| 14 | 4 °C | Desiccated | Trehalose |

Commercial sources of additives and buffer components are listed in Table 3.

**Table 3**

| Commercial Sources of Additives and Fine Chemicals | | | |
|---|---|---|---|
| Name | Supplier | Cat. No. | Lot Number |
| Sodium Chloride (NaCl) | Merck, | 1.06404 | K22156904533 |
| Hydroxypropyl-β-cyclodextrin (HBC), 45 % (w/v) solution | RBI | H-107 | BJO-996A |
| Hydroxypropyl-γ-cyclodextrin (HGC), 45 % (w/v) solution | RBI | H-125 | CW-190A |
| Trehalose | Sigma | T-5251 | 16H3816 |
| Dimethylsulphoxide (DMSO) | Merck | 1.02952 | K22605452609 |

### Storage Procedures and Containers

### 1. "-80 °C Controls"

Of each compound several 20 µl aliquots were stored at -80 °C in Eppendorf tubes. At the time of analysis one aliquot was removed, thawed and transfered to a HPLC vial. Although the -80 °C controls were always the first samples to be HPLC analyzed, they resided up to 2 hours at room-temperature in the HPLC-autosampler.

### 2. "dry-storage"

20 µl aliquots of each compound (1 mM, contained in 50 % DMSO, 10 mM NaCl) were placed in the wells of Greiner V-shaped microtiterplates (MTPs, Greiner Product Code: 651101) and dried down in a desiccator (overnight at room-temperature). The MTPs containing the dried pellets were covered with a transparent, self-adhesive film (Greiner, CatNo: 676001) and were placed in made-to-measure heat-sealable multi-layer storage bags (outside layer: aluminium; inside layer: polyethylene). To ensure a dry atmosphere inside the bag a small amount of blue silica-gel was added prior to sealing. For HPLC analysis, the MTPs were removed from the bags and the compounds reconstituted in 20 µl of water by pipetting up-and-down several times. In order to sediment any undissolved particles, the MTPs were centrifuged at 3700 x g 5 min and the supernatants were transferred to HPLC vials.

### 3. "DMSO-solutions"

DMSO-solutions of compounds (1 mM, contained in 50 % DMSO, 10 mM NaCl) were also stored in MTPs (160 µl/well) which were sealed in storage bags (without silica gel). For storage at day-light, the MTP was covered with transparent film and placed on top of the laboratory shelf (NB: Recently, transmission spectra of the sealing foil were recorded. They reveal a sharp cut-off below 300 nm). For HPLC analysis, a 20 µl aliquot of each compound was removed and the MTP was subsequently resealed in a new bag.

### Recipes of Solutions containing Compounds & Additive

In order to reduce the number of pipetting steps a set of additive stock solutions were prepared (Table 4) and used to create Master-mixes" containing compounds. The volumes shown in Table 4 and of the Master-mixes" are calculated for one panel of 10 compounds (e.g. compounds A - J).

**Table 4**

| Stock Solutions of Additives and NaCl Solutions | |
|---|---|
| Stock Solution | Composition |
| 20 mM NaCl (7ml) | 140 µl 1M NaCl + 6860 µl water |
| 40 mM NaCl (6ml) | 240 µl 1M NaCl + 5760 µl water |
| 6% HBC (2.3ml) | 307 µl 45% (w/v) HBC Solution + 1993 µl water |
| 6% HGC (1.5ml) | 89.7 mg HGC + 1495 µl water |
| 6% Trehalose (1.9 ml) | 111.1 mg Trehalose +1852 µl water |

### Master-Mix I: Storage without Additive

Final Composition: 1 mM compound, 50 % (v / v) DMSO / 10mM NaCl
1. Premix: 5111 µl 100 % DMSO + 6389 µl 20 mM NaCl
2. Aliquot into 10 Eppendorf tubes (1080 µl each).
3. For each of the 10 compounds, 120 µl stock solution (10 mM in 100 % DMSO) were added to yield a total of 1.2 ml of mM compound solution.

1.2 ml solution were used for 7 batches:
> 21 x 20 µl aliquots: 7 batches x 3 different conditions: -80 °C, dry-storage at 4 °C & RT
> 3 x 160 µl aliquots for storage in DMSO-solution at RT, RT-light, 4°C

### Master-Mix II: Storage in presence of 1.5 % (w / v) HBC

Final composition: 1 mM compound, 50 % (v / v) DMSO / 10mM NaCl / 1,5 % (w / v) HBC
1. Premix: 3556 µl 100 % DMSO + 2222 µl 40mM NaCl + 2222 µl 6 % (w / v) HBC
2. Aliquot (720 µl each) in 10 Eppendorf tubes
3. For each of the 10 compounds, 80 µl stock-solution (10 mM in 100 % DMSO) were added

0.8 ml stock solution were used for 7 batches:
> 14 x 20 µl aliquots (two different storage conditions): dry-storage 4°C & RT
> 2 x 160 µl aliquots: storage in DMSO-Solution (RT, 4°C)

### Master-Mix III: Storage in presence of 1.5% (w /v) HGC

Final composition : 1 mM compound, 50 % (v /v) DMSO / 10mM NaCl /1.5 % (w / v) HGC
1. Premix: 2222 µl 100 % DMSO + 1389 µl 40mM NaCl + 1389 µl 6 % HGC
2. Aliquot (360 µl each) in 10 Eppendorf tubes
3. For each of the 10 compounds, 40 µl stock-solution (10 mM in 100 % DMSO) were added.

0.4 ml stock solution were used for 7 batches:
> 14 x 20 µl aliquots (two different conditions): dry-storage 4 °C & RT

### Master-Mix IV: Storage in presence of 1.5 % (w / v) Trehalose

Final composition: 1 mM compound, 50 % (v / v) DMSO / 10mM NaCl / 1,5 % (w / v) Trehalose
1. Premix 2222 µl 100 % DMSO + 1389 µl 40mM NaCl + 1389 µl 6 % Trehalose
2. Aliquot (360 µl each) in 10 Eppendorf tubes
3. For each of the 10 compounds, 40 µl stock-solution (10 mM in 100 % DMSO) were added.

0.4 ml stock solution were used for 7 batches:
>14 x 20 µl aliquots (two different conditions): dry-storage 4 °C & RT

### Example 2: Stability study of 3'Azido-3'deoxythymidine (AZT)

The method, according to claim 1 was used for a primer extension assay using HIV Reverse Transcriptase (HIV-RT).
Precoating the assay plate: 1 µl aliquots of 0.1% (w/v) aqueous solution of HBC (2-hydroxypropyl-β-cyclodextrin) was pipetted into the wells of a nanotiter plate and subjected to a flow of nitrogen gas until all the solvent (water) was evaporated. The evaporation took place at room-temperature and resulted in the formation of a film consisting of amorphous HBC residing at the bottom of the nanotiter plate. As a control, a section of the nanotiter plate was not coated with HBC. The plate was subsequently loaded with 1 µl (1 mg/ml) of the HIV Reverse Transcriptase Inhibitor AZT (3'Azido-3'deoxythymidine) contained in 50 mM DMSO/ 10 mM NaCl. The solvent (DMSO/water) evaporated by exposure to a flow of nitrogen gas at room-temperature. As a control, some wells of the nanotiter plate (coated and non-coated) were not charged with AZT. The plates were stored in a desiccator overnight at room-temperature.

The primer extension assay was performed by pipetting 900 nanoliter of a reaction mix containing: 2 pmol TMR-lablled 20 base oligo deoxynucleotide anneald to a 200 base RNA-template (gag region of the HIV genome), 50 mM Tris-HCl pH 8.2, dissolved, 50 mM NaCl, 1 mM of each dNTP. The nanotiter plate was incubated at 40°C for 2 min and the extension reaction stopped by the addition of 100 nanoliter 0.5 M EDTA. The primer extension products were analyzed by FCS.

### Results:

1. A good primer extension (due to HIV-RT activity) was observed by FCS buy the appearance of labeled DNA-strands of slow diffusion times, both in wells without AZT which were coated with HBC and in those not precoated with HBC.
2. Primer extension was found to be inhibited in wells which were coated with both HBC and AZT but only partially inhibited in wells not coated with HBC. The presence of HBC during dry-storage therefore preserves the inhibitory activity of AZT compared to dry-storage of AZT without any auxiliary substance.

The invention described herein is not to be limited by the specific embodiments herein disclosed, since these embodiments are intended as illustrations of several aspects of the invention. The invention is defined in the appended claims.

## Claims

1. A method for sample preparation in the field of high throughput screening for pharmaceutically active compounds comprising the steps of:
- combining a solution of a compound with an effective amount of an additive or a mixture of additives in a container, wherein said additive or said mixture of additives is present in said container before adding a solution of a compound and the additive is cyclodextrin or a derivative thereof,
- removing the solvent of said compound,
- storing said container,
- redissolving said compound, and
- combining a solution of a substance to be tested for its potential interaction with said compound.

2. The method of claim 1, further comprising the step of identifying whether said compound interacts with said substance.

3. The method of claim 1, wherein said additive or said mixture of additives is present in said container in immobilized form before adding said solution of a compound.

4. The method of claim 1, wherein a solution of an additive or mixture of additives is combined with said solution of a compound and the solvent of said additive(s) is removed, preferably together with the solvent of said compound, before storing said container.

5. The method of claim 1, wherein the step of redissolving said compound is carried out by combining a solution of a substance to be tested for its potential interaction with said compound.

6. The method of claim 1, wherein said container is a multi-well container.

7. The method of claim 1, wherein said cyclodextrin or a derivative thereof is hydroxypropyl-β-cyclodextrin.

8. The method of claim 7, wherein said hydroxypropyl-β-cyclodextrin is present in a final amount being from about 0.05 % to 4 % by weight, preferably from about 0.05 % to 2 % by weight, more preferably from about 0.1 % to 1.5 % by weight, based on the total volume of the final solution after the solution of the substance to be tested has been added.

## Patentansprüche

1. Verfahren zur Probenvorbereitung auf dem Gebiet des Hochdurchsatz-Screenings nach pharmazeutisch aktiven Verbindungen, die folgenden Schritte umfassend:
- Kombinieren einer Lösung einer Verbindung mit einer effektiven Menge eines Additivs oder eines Gemischs von Additiven in einem Behälter, wobei das Additiv oder das Gemisch von Additiven in dem Behälter vorhanden ist, bevor man eine Lösung einer Verbindung hinzufügt, und es sich bei dem Additiv um Cyclodextrin oder ein Derivat davon handelt;
- Entfernen des Lösungsmittels von der Verbindung;
- Aufbewahren des Behälters;
- Wiederauflösen der Verbindung; und
- Kombinieren einer Lösung einer auf ihre potentielle Wechselwirkung zu testenden Substanz mit der Verbindung.

2. Verfahren gemäß Anspruch 1, das weiterhin den Schritt des Identifizierens, ob die Verbindung mit der Substanz wechselwirkt, umfasst.

3. Verfahren gemäß Anspruch 1, wobei das Additiv oder Gemisch von Additiven in dem Behälter in immobilisierter Form vorhanden ist, bevor man die Lösung einer Verbindung hinzufügt.

4. Verfahren gemäß Anspruch 1, wobei eine Lösung eines Additivs oder Gemischs von Additiven mit der Lösung einer Verbindung kombiniert wird und das Lösungsmittel des bzw. der Additive, vorzugsweise zusammen mit dem Lösungsmittel der Verbindung, entfernt wird, bevor man den Behälter lagert.

5. Verfahren gemäß Anspruch 1, wobei der Schritt des Wiederauflösens der Verbindung durchgeführt wird, indem man eine Lösung einer auf ihre potentielle Wechselwirkung zu testenden Substanz mit der Verbindung kombiniert.

6. Verfahren gemäß Anspruch 1, wobei der Behälter ein Multinapfbehälter ist.

7. Verfahren gemäß Anspruch 1, wobei es sich bei dem Cyclodextrin oder Derivat davon um Hydroxypropyl-β-cyclodextrin handelt.

8. Verfahren gemäß Anspruch 7, wobei das Hydroxypropyl-β-cyclodextrin in einer endgültigen Menge vorhanden ist, die etwa 0,05 bis 4 Gew.-%, vorzugsweise etwa 0,05 bis 2 Gew.-%, besonders bevorzugt etwa 0,1 bis 1,5 Gew.-% beträgt, bezogen auf das Gesamtvolumen der endgültigen Lösung, nachdem die Lösung der zu testenden Substanz hinzugefügt wurde.

## Revendications

1. Un procédé pour la préparation d'échantillons dans le domaine du criblage à grand débit pour des composés pharmaceutiquement actifs comprenant les opérations consistant :
à combiner une solution d'un composé avec une quantité efficace d'un additif ou d'un mélange d'additifs dans un récipient, ledit additif ou ledit mélange d'additifs étant présent dans ledit récipient avant addition d'une solution d'un composé et l'additif étant la cyclodextrine ou un dérivé de la cyclodextrine,
à éliminer le solvant dudit composé
à mettre en réserve ledit récipient,
à redissoudre ledit composé, et
à combiner une solution d'une substance à tester quant à son interaction potentielle avec ledit composé.

2. Le procédé de la revendication 1, comprenant en outre l'opération consistant à identifier si ledit composé interagit avec ladite substance.

3. Le procédé de la revendication 1, dans lequel ledit additif ou ledit mélange d'additifs est présent dans ledit récipient sous forme immobilisée avant addition de ladite solution d'un composé.

4. Le procédé de la revendication 1, dans lequel une solution d'un additif ou un mélange d'additifs est combinée avec ladite solution d'un composé et le solvant du ou desdits additifs est éliminé, de préférence en même temps que le solvant dudit composé, avant mise en réserve dudit récipient.

5. Le procédé de la revendication 1, dans lequel l'opération de redissolution dudit composé est réalisée par combinaison d'une solution d'une substance à tester quant à son interaction potentielle avec ledit composé.

6. Le procédé de la revendication 1, dans lequel ledit récipient est un récipient à puits multiples.

7. Le procédé de la revendication 1, dans lequel ladite cyclodextrine ou dérivé de la cyclodextrine est l'hydroxypropyl-β-cyclodextrine.

8. Le procédé de la revendication 7, dans lequel ladite hydroxypropyl-β-cyclodextrine est présente en une proportion finale d'environ 0,05 % à 4 % en poids, de préférence d'environ 0,05 % à 2 % en poids, plus avantageusement d'environ 0,1 % à 1,5 % en poids, sur la base du volume total de la solution finale après que la solution de la substance à tester a été ajoutée.
